# EUROPEAN PATENT SPECIFICATION

(11) **EP 2 145 523 B1**
(45) Date of publication and mention of the grant of the patent: **20.02.2013**
(21) Application number: 09164682.8
(22) Date of filing: 06.07.2009
(51) Int. Cl.: A01D 41/12

(54) **Belted grain tank floor**
Mit Bändern versehener Getreidespeicherboden
Cuve de grain ceinturée

(30) Priority: 15.07.2008 US 173583
(43) Date of publication of application: 20.01.2010
(73) Proprietor: Deere & Company, Moline, IL 61265-8098 (US)
(72) Inventor: Coers, Bruce A., Hillsdale, IL 61257 (US); Burke, Daniel J., Cordova, IL 61242 (US); Mackin, Ryan P., Milan, IL 61264 (US); Anderson, Shane, Syracuse, UT 84075 (US); Rix, David, Sandy, UT 84070 (US)
(74) Representative: Holst, Sönke

(56) References cited:
- DE-A1- 2 802 953
- GB-A- 1 139 902
- US-A- 1 862 159
- US-A- 3 286 862
- US-A- 3 409 155
- US-A1- 2003 130 018

## Description

Agricultural harvesters, such as combines, include a head and a feeder housing which remove the crop material from the field, gather the crop material and transport the crop material to a separator in the harvester. The separator removes the grain crop material from the non-grain crop material. The grain is cleaned and deposited in a grain tank on the harvester. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

It is known to provide a door at the bottom of a grain tank on a harvester and a conveyor adjacent to the door opening for transporting grain from the grain tank to an auger also on the harvester, for subsequent transport by the auger to the vehicle. It is known to drain the grain by gravity flow from the grain tank onto the conveyor. It is known to slope the walls and the floor of the grain tank to promote gravity flow of the grain through the door opening.

A trend in agricultural machines is for the size of the machines to become larger, reducing the number of passes required to cover a field. As the harvester width is increased, more grain is harvested during each pass over the field. Accordingly, it is desirable to increase the grain tank capacity to maximize productive crop harvesting time between unloading events. In many situations it is necessary to stop the harvester for unloading. Accordingly, it is desirable to reduce the frequency of unloading and to increase unloading efficiency to minimize the time required for unloading, and thereby maximize harvesting efficiency.

Providing sloped sides and a sloped floor reduces the grain tank storage volume for the footprint of the grain tank on the harvester. Grain tank capacity can be increased by simply increasing the height of the grain tank. However, this raises the center of gravity, which is undesirable.

Unloading by gravity flow can be unreliable and inefficient. The grain tanks do not always empty completely, and it may be necessary to clean the grain tank manually when switching between different crops. Further, as the grain tank empties, the discharge rate from the grain tank decreases, and considerable time may be required to remove a small volume at the end of the emptying cycle when emptying the grain tank by gravity flow.

US 2003/0130018 A1 describes a grain module for an agricultural combine with a grain tank. An endless conveyor conduit receives grain from the combine's grain tank and selectively feeds it into the module grain tank or removes it from the module grain tank. The module may comprise the rear section of an articulated combine vehicle wherein the front section contains grain threshing and separating systems. The module comprises a door in a side wall and a driven conveyor at the bottom, side walls and upper wall, wherein the conveyor at the upper wall discharges the grain into the unloading auger.

US 3 409 155 A describes a bulk feed vehicle with a longitudinal conveyor belt at the bottom that discharges the material to a transverse feeder belt for discharging the material from the vehicle. Both belts are jointly driven or stopped.

What is needed in the art is a grain tank on a harvester with increased capacity for the footprint of the grain tank on the harvester, and a grain tank that empties quickly and reliably.

This object is achieved with the subject matter of claim 1.

A crop harvester has a harvesting head and a body in which a crop is processed. A grain tank on the body receives processed grain. An opening is provided in the grain tank, and a sliding door on the grain tank is operable to cover and uncover the opening. A conveyor adjacent the opening moves grain received through the opening away from the grain tank. An active floor in the grain tank moves grain in the grain tank toward the opening. The active floor comprises an endless rotatable belt spanning the space between said sides. The belt is disposed substantially horizontal and has a discharge end extending through said opening. The conveyor at an end of the grain tank arranged to receive grain from the grain tank is a cross conveyor. The discharge end of the belted conveyor overlies the cross conveyor. The door slides against an upper surface of the belt. The active floor can be operated independent from the cross conveyor.

An embodiment of the invention is shown in the drawings, in which:
Fig. 1 is a perspective view of an agricultural harvester which includes an embodiment of a belted grain tank floor of the present invention;
Fig. 2 is a fragmentary perspective view of the top of the harvester shown in Fig. 1;
Fig. 3 is a perspective view of a grain tank having a belted floor in accordance with the present invention;
Fig. 4 is a cross-sectional view of the grain tank shown in Fig. 3, illustrating the grain tank open for emptying; and
Fig. 5 is a cross-sectional view similar to that of Fig. 4, but illustrating the door of the grain tank closed.

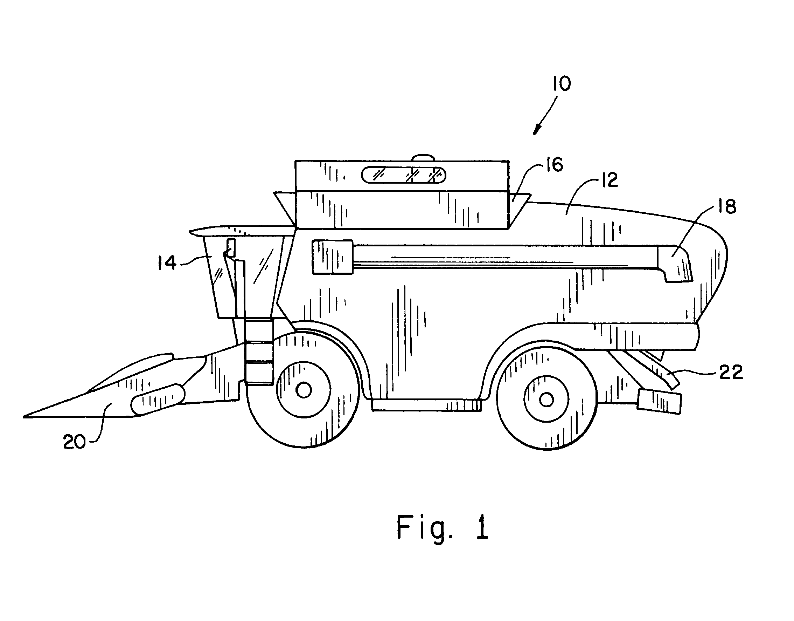

Referring now to the drawings, and more particularly to Fig. 1, there is shown an embodiment of an agricultural harvester 10. Harvester 10 generally includes a body 12, an operator cab 14, a grain tank 16 and an unloading auger 18. Harvester 10 is detachably coupled with a cutting platform or head 20 in front of operator cab 14. A crop material is removed from the field by head 20 and transported from head 20 into a separator within harvester 10. The grain is separated from the non-grain or refuse crop material, with the grain being transported into grain tank 16 and the non-grain refuse crop material being discharged back onto the field via a straw chopper 22.

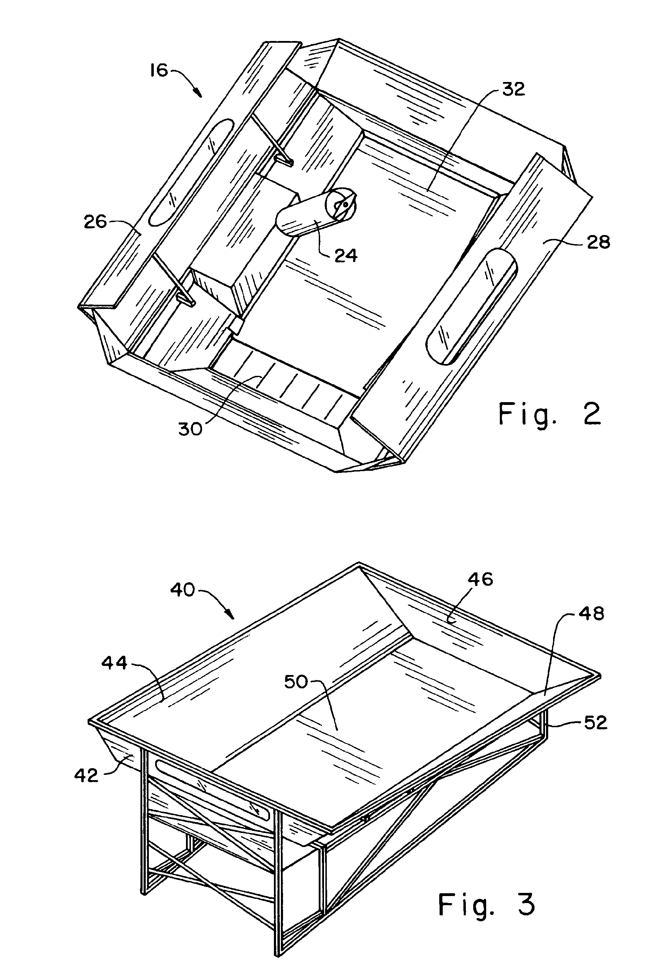

Grain tank 16 receives grain from an auger 24, and may include a plurality of covers 26, 28 over the top thereof. A cross conveyor 30 at an end of grain tank 16 receives grain from grain tank 16 and transports the grain to unloading auger 18. Fig. 2 illustrates grain tank 16 in an opened condition to expose cross conveyor 30 during an unloading operation. An active floor 32 is provided in the bottom of grain tank 16 for active transport of grain thereon toward cross conveyor 30.

A simplified illustration of a grain tank 40 of the present invention is shown in Fig. 3. Grain tank 40 includes a plurality of side walls 42, 44, 46 and 48 defining a space for the receipt of grain therein. An active floor in the way of a belted conveyor floor 50 is provided at the bottom of grain tank 40 for actively transporting grain thereon. Other types of active floors also can be used, such as, for example, a drag chain. Grain tank 40 is supported in a harvester by a supporting framework 52 attached to harvester 10. Belted conveyor floor 50 forms the entire floor or bottom in grain tank 40, substantially spanning the entire area defined between the lower edges of side walls 42, 44, 46 and 48.

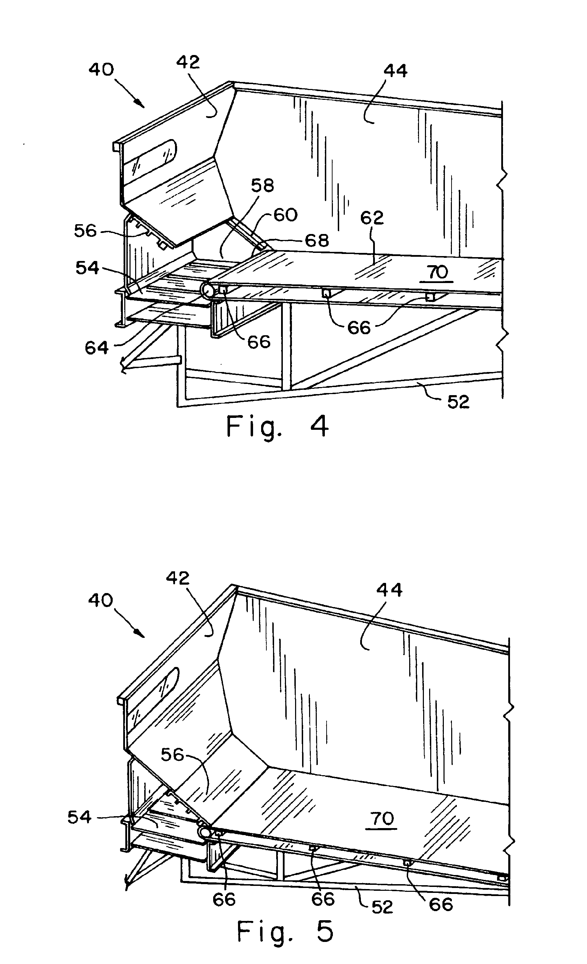

With reference now to the cross-sectional views of Figs. 4 and 5, a cross conveyor 54 is provided at an end of grain tank 40. A door 56 is provided in an opening 58 through which grain flows from grain tank 40 to cross conveyor 54. Door 56 is a sliding door operable in channels 60, one of which can be seen in Fig. 4. It should be understood that a second channel similar to channel 60 is provided at the side of opening 58 opposite from the side illustrated in Figs. 4 and 5.

Belted conveyor floor 50 is a looped endless belt conveyor having an endless belt 62 supported about rollers 64 and support members 66. Support members 66 span the distance from one side wall to an opposite side wall of tank 40, and are disposed between upper and lower runs of looped endless belt 62. Support members 66 provide support to endless belt 62 having grain loaded thereon.

Belted conveyor 50 extends through opening 58 and has a discharge end 68 thereof positioned over cross conveyor 54. As can be seen in Fig. 5, door 56 closes opening 58 and slides against an upper surface 70 of belt 62. Even if some grain slides between belt 62 and door 56, since discharge end 68 of belted conveyor floor 50 overlies cross conveyor 54, the grain will accumulate on cross conveyor 54 for subsequent transport to unloading auger 18 during a next unloading operation, and the grain, thereby, is not lost.

During an unloading operation, it is not necessary to operate an active floor of the present invention during the entire unloading process. The unloading operation is commenced by opening the door and draining grain from the grain tank by gravity flow through the door opening. For opening, the door is slid in the channels to uncover the opening and allow grain to drain from the grain tank by gravity flow. The grain tank discharge rate, which is the flow rate of grain from the grain tank, decreases as the grain tank empties. When the discharge rate decreases a significant amount, the active floor can be operated to transport grain thereon toward and through the grain tank opening to be dumped onto the cross-conveyor. Even only a slow, steady rotation of the endless belt will improve the grain tank emptying efficiency by actively moving the grain on the floor toward and through the door opening.

The walls of the grain tank can be angled inwardly slightly to promote flow and emptying; however, the walls need not be severely sloped nor need the floor be sloped toward the door opening. The active floor can be positioned substantially horizontally at the bottom of the sidewalls. Accordingly, in comparison to previously known grain tank designs with angled walls and an angled floor, the capacity of the grain tank of the present invention is increased without increasing the foot print of the grain tank on the harvester, and without increasing the grain tank height. Accordingly, capacity is increased while at the same time reducing the center of gravity in that the increased tank volume is achieved at the bottom of the grain tank. Since the grain in the grain tank is actively transported to the opening and does not rely completely on gravity drainage, emptying the grain tank is both efficient and thorough.

## Claims

1. A crop harvester (10) comprising:
a harvesting head (20) and a body (12) in which a crop is processed;
a grain tank (16, 40) on said body (12) for receiving grain, the grain tank (16, 40) having a plurality of vertical or slightly inwardly angled sides (42, 44, 46, 48) defining a space in which grain is accumulated; and
a conveyor (30, 54) adjacent an opening (58) in one of said sides (42, 44, 46, 48) of the grain tank (16, 40) to receive grain from said grain tank (16, 40) through said opening (58),
**characterized in that** the grain tank (16, 40) comprises a sliding door (56) operable in said opening (58) to selectively cover and uncover the opening (58) and an active floor (32, 50)
between said sides (42, 44, 46, 48) at a bottom of said grain tank (16, 40),
that the active floor (32, 50) is selectively operable to transport grain on said floor (32, 50) toward said opening (58) and comprises an endless rotatable belt (62) spanning the space between said sides (42, 44, 46, 48),
that the belt (62) is disposed substantially horizontal and has a discharge end (68)
extending through said opening (58),
that the conveyor (30, 54) at an end of the grain tank (16, 40) arranged to receive grain
from the grain tank (16, 40) is a cross conveyor (30, 54),
that the discharge end (68) of the belted conveyor (62) overlies the cross conveyor (30, 54)
that the door (56) slides against an upper surface (70) of the belt (62),
and that the active floor (32, 50) can be operated independent from the cross conveyor (30, 54).

## Patentansprüche

1. Erntegute-Erntemaschine (10) mit
einem Erntevorsatz (20) und einem Körper (12), in dem ein Erntegut bearbeitet wird,
einem Korntank (16, 40) an dem Körper (12) zur Aufnahme von Korn, wobei der Korntank (16, 40) mehrere vertikale oder leicht nach innen abgewinkelte Seiten (42, 44, 46, 48) hat, die einen Raum definieren, in dem Korn angesammelt wird, und einem Förderer (30, 54), angrenzend an einer Öffnung (58) in einer der Seiten (42, 44, 46, 48) des Korntanks (16, 40) zur Aufnahme von Korn vom Korntank (16, 40) durch die Öffnung (58),
**dadurch gekennzeichnet, dass** der Korntank (16, 40) eine Schiebetür (56), die in der Öffnung (58) betätigt werden kann, um die Öffnung (58) gezielt abzudecken und aufzudecken, und einen Aktivboden (32, 50) zwischen den Seiten (42, 44, 46, 48) an einem Boden des Korntanks (16, 40) umfasst,
dass der Aktivboden (32, 50) gezielt betätigt werden kann, um Korn auf dem Boden (32, 50) zu der Öffnung (58) zu transportieren, und ein drehbares Endlosband (62) umfasst, das den Raum zwischen den Seiten (42, 44, 46, 48) überspannt,
dass das Band (62) im Wesentlichen horizontal angeordnet ist und ein Austragende (68) hat, das sich durch die Öffnung (58) erstreckt,
dass der Förderer (30, 54) an einem Ende des Korntanks (16, 40), der angeordnet ist, um Korn vom Korntank (16, 40) zu empfangen, ein Querförderer (30, 54) ist,
dass das Austragende (68) des Bandförderers (62) über dem Querförderer (30, 54) liegt,
dass die Tür (56) gegen eine obere Fläche (70) des Bands (62) gleitet
und dass der Aktivboden (32, 50) unabhängig von dem Querförderer (30, 54) betätigt werden kann.

## Revendications

1. Moissonneuse (10), comprenant :
une tête de récolte (20) et un corps (12) dans lequel une récolte est traitée ;
un réservoir à grain (16, 40) sur ledit corps (12) pour recevoir du grain, le réservoir à grain (16, 40) ayant une pluralité de côtés verticaux ou légèrement inclinés vers l'intérieur (42, 44, 46, 48) délimitant un espace dans lequel du grain est accumulé ; et
un transporteur (30, 54) adjacent à une ouverture (58) dans l'un desdits côtés (42, 44, 46, 48) du réservoir à grain (16, 40) pour recevoir du grain provenant dudit réservoir à grain (16, 40) à travers ladite ouverture (58),
**caractérisée en ce que** le réservoir à grain (16, 40) comprend une porte coulissante (56) pouvant être actionnée dans ladite ouverture (58) pour couvrir et découvrir de manière sélective l'ouverture (58) et un plancher actif (32, 50) entre lesdits côtés (42, 44, 46, 48) au fond dudit réservoir à grain (16, 40),
**en ce que** le plancher actif (32, 50) peut être actionné de manière sélective pour transporter du grain sur ledit plancher (32, 50) en direction de ladite ouverture (58) et comprend une bande rotative sans fin (62) enjambant l'espace entre lesdits côtés (42, 44, 46, 48),
**en ce que** la bande (62) est disposée sensiblement horizontalement et a une extrémité d'évacuation (68) s'étendant à travers ladite ouverture (58), **en ce que** le transporteur (30, 54) à une extrémité du réservoir à grain (16, 40) agencée pour recevoir du grain provenant du réservoir à grain (16, 40) est un transporteur transversal (30, 54), **en ce que** l'extrémité d'évacuation (68) du transporteur à bande (62) recouvre le transporteur transversal (30, 54),
**en ce que** la porte (56) coulisse contre une surface supérieure (70) de la bande (62),
et **en ce que** le plancher actif (32, 50) peut être actionné indépendamment du transporteur transversal (30, 54).
